# EUROPÄISCHE PATENTSCHRIFT

(11) **EP 3 360 659 B1**
(45) Veröffentlichungstag und Bekanntmachung des Hinweises auf die Patenterteilung: **27.10.2021**
(21) Anmeldenummer: 18153931.3
(22) Anmeldetag: 29.01.2018
(51) Int. Cl.: B28B 1/00, B28B 7/46, B29C 64/241, B33Y 10/00, B33Y 30/00, B22F 10/10, B22F 10/20, B22F 12/00

(54) **VERFAHREN ZUR ADDITIVEN FERTIGUNG MIT KONTINUIERLICHEM SCHICHTAUFTRAG**
METHOD FOR ADDITIVE MANUFACTURE WITH CONTINUOUS LAYER APPLICATION
PROCÉDÉ DE FABRICATION ADDITIVE PAR APPLICATION CONTINUE DE COUCHES

(30) Priorität: 02.02.2017 DE 102017102068
(43) Veröffentlichungstag der Anmeldung: 15.08.2018
(73) Patentinhaber: Bundesrepublik Deutschland, vertreten durch den Bundesminister für Wirtschaft und Energie, 12205 Berlin (DE)
(72) Erfinder: GÜNSTER, Jens, 38678 Clausthal-Zellerfeld (DE); ZOCCA, Andreas, 10827 Berlin (DE)
(74) Vertreter: Zimmermann & Partner Patentanwälte mbB

(56) Entgegenhaltungen:
- WO-A1-98/56566
- WO-A1-2014/092651
- WO-A2-2012/164078
- DE-A1-102009 046 440

## Beschreibung

Die Erfindung liegt auf den Gebieten des Rapid Prototyping und Rapid Manufacture von Keramik und Metallen, des Anlagenbaus und der Produktion von keramischen Bauteilen in Massenfertigung. Insbesondere betrifft die Erfindung additive schlickerbasierte Fertigungsverfahren. Diese additiven schlickerbasierten Fertigungsverfahren basieren auf der sequentiellen Erzeugung von Schlickerschichten, die aufeinander gestapelt und sequentiell konsolidiert werden.

Die pulverbasierte additive Fertigung basiert auf dem Stapeln von einzelnen, jeweils gesondert erzeugten Pulverschichten und dem lokalen Konsolidieren des Pulvers das letztlich, ggf. nach einem Sinterschritt zu dem gewünschten Bauteil führt. Die Schichten können unter Verwendung eines (trockenen) fließfähigen Pulvers oder unter Verwendung einer Suspension mit anschließendem Trocknen aufgebracht werden. Dabei wird die erste Schicht direkt auf der Bauplattform aufgebracht. Weitere Schichten werden auf der jeweils vorhergehend generierten Schicht aufgebracht und lokal konsolidiert. Das erfolgt solange repetitiv, bis das konsolidierte Bauteil im vollständigen Schichtstapel, d.h. im Pulverbett oder im Schlickerbett vorliegt.

Der Prozess der additiven Fertigung wird somit durch folgende drei Arbeitsschritte eines Zyklus beschrieben, die einander zyklisch wiederholen:
- Aufbau einer Pulverschicht;
- lokale Konsolidierung des Pulvers durch Einspritzen von Binder durch einen Druckkopf oder durch lokales Sintern mit einem fokussierten Laserstrahl;
- Absenken der Bauplattform um die Schichtdicke.

Da der Schichtauftrag und das Aufbringen des Binders mittels Druckkopf in zeitlicher Abfolge auf der gleichen Bauplattform stattfinden, wartet der Druckkopf auf den Schichtauftrag und der Schichtauftrag auf den Druckkopf. Mit anderen Worten, wartet der Druckkopf (oder Laser) auf den Abschluss des Schichtauftrages für die mit Binder (oder Laserenergie) zu konsolidierende Schicht. Ebenso kann der Schichtauftrag für die nächste Schicht erst starten, nachdem die Konsolidierung der aktuellen Schicht abgeschlossen ist.

Vor diesem Hintergrund wird ein Verfahren nach Anspruch 1 vorgeschlagen. Weitere Ausführungsformen, Modifikationen und Verbesserungen ergeben sich anhand der folgenden Beschreibung und der beigefügten Ansprüche.

Gemäß einer Ausführungsform wird ein schlickerbasiertes Additivverfahren zur Erzeugung eines schichtweise aufgebauten Bauteils in einem Pulverbett vorgeschlagen. Dieses Additivverfahren umfasst ein kontinuierliches Auftragen eines Schlickers in Form einer Schlickerschicht entlang einer in sich geschlossenen Bahn, wobei das Pulverbett auf einer Arbeitsplattform angeordnet ist, wobei die kontinuierlich aufgetragene Schlickerschicht kontinuierlich einer Entfeuchtung unterzogen wird und dabei eine kontinuierliche Pulverschicht ausbildet, und wobei einzelne zueinander benachbarte Abschnitte der kontinuierlichen Pulverschicht einer Konsolidierung unterzogen werden, sodass das schichtweise aus konsolidierten Abschnitten der Pulverschicht aufgebaute Bauteil vom Pulverbett umgeben ist.

Vorteile des vorgeschlagenen Verfahrens umfassen geringen Wartungsaufwand, verringerte Materialkosten und gesteigerte Effektivität.

Erfindungsgemäß wird die kontinuierlich aufgetragene Schlickerschicht unmittelbar auf der Arbeitsplattform aufgetragen, solange die in sich geschlossene Bahn zum ersten Mal abgefahren wird. Unmittelbar daran anschließend wird die Schlickerschicht jeweils auf einem neuen Abschnitt der zuvor ausgebildeten kontinuierlichen Pulverschicht aufgetragen. Es wird also die Schlickerschicht stets auf einem bereits zuvor zu einer Pulverschicht getrockneten ehemaligen Abschnitt der kontinuierlich fortlaufenden Schlickerschicht aufgetragen. Sähe man davon ab, dass sich die Schlickerschicht durch eine Entfeuchtung in eine Pulverschicht umwandelt, wird die kontinuierlich ausgebrachte Schlickerschicht stets erneut auf sich selbst abgelegt. Das alles erfolgt in Form einer kontinuierlichen Kurve, ohne Überschneidungen oder Kreuzungen der von einer entsprechenden Schlickerauftragungseinheit (Schichtauftragungseinheit, Rakel) zurückgelegten Bahn.

Vorteile ergeben sich insbesondere aus dem kontinuierlichen Arbeitsablauf. Eingangs erwähnte Wartezeiten und daraus erwachsende Komplikationen fallen einfach weg.

Gemäß einer weiteren Ausführungsform bildet eine Projektion eines beim Auftragen des Schlickers von einer Schlickerauftragungseinheit in Relation zu einem festen Punkt auf der Arbeitsplattform zurückgelegten Weges auf eine Ebene, die parallel zur Arbeitsplattform angeordnet ist, die in sich geschlossene Bahn. Die Bahn kann jegliche Krümmungen oder gerade Abschnitte aufweisen, wesentlich ist, dass sie als geschlossene Kurve erscheint, wenn sie orthogonal zu ihrem Verlauf projiziert wird. Die Schlickerauftragungseinheit trägt kontinuierlich Schlicker auf und tut dies - wie im nächsten Ausführungsbeispiel explizit beschrieben - nach einem allerersten Durchlaufen der Bahn nicht mehr unmittelbar auf der Arbeitsplattform, sondern jeweils auf einem neuen Abschnitt der zwischenzeitlich aus der Schlickerschicht ausgebildeten Pulverschicht.

Vorteilhaft weist der so kontinuierlich erzeugte Schichtstapel eine geringe Steigung auf, wenn der entlang der Bewegungsbahn zurückgelegte Weg vergleichsweise lang ist.

Erfindungsgemäß steigt zunächst eine Schichtdicke der Schlickerschicht unmittelbar auf der Arbeitsplattform von einem Schichtdickenminimalwert stetig auf einen Schichtdickensollwert an.

Vorteile ergeben sich aus dem Vermeiden von Stufen im nachfolgenden Schichtaufbau, der mithin als Schichtstapel aufgefasst werden kann.

Gemäß einer weiteren Ausführungsform entspricht die Schichtdicke der Schlickerschicht, welche nicht unmittelbar auf der Arbeitsplattform, sondern jeweils auf einem neuen Abschnitt der zuvor ausgebildeten Pulverschicht aufgetragen wird, stets dem Schichtdickensollwert, sodass das kontinuierlich ausgebildete Pulverbett in einer Richtung, die zu einer Oberflächenebene der Arbeitsplattform orthogonal verläuft, einen Stapel von Pulverschichten von jeweils konstanter Dicke umfasst. Ergibt die Projektion eine Kreisbahn, so entspricht die Anordnung der Pulverschicht einer sich allmählich in die Höhe schraubenden Bahn, vergleichbar dem Gewinde einer Schraube.

Vorteile eines Stapels von Schichten konstanter Dicke erwachsen aus der vereinfachten Übertragbarkeit der im sogenannten Slice-Verfahren gewonnenen Steuerdaten für die Konsolidierungseinheit.

Gemäß einer weiteren Ausführungsform umfasst das Additivverfahren weiterhin den Schritt: Bereitstellen eines Schlickers. Der Schlicker selbst ist erfindungsgemäß ausgewählt unter einem Schlicker, umfassend keramische Pulverpartikel und/oder metallische Pulverpartikel, suspendiert in einem Suspensionsmittel.

Vorteile der Verwendung von Schlickern sind deren Homogenität. Es sind weitestgehend oder vollständig bindemittelfreie Schlicker kommerziell verfügbar. Der jeweils benötigte Schlicker kann aber auch gesondert für das Verfahren bereitgestellt werden und also nach einer eigenen Rezeptur angesetzt werden. Die Zusammensetzung kann bevorzugten Verfahrensparametern angepasst werden. Als Schlicker kommen auf Wasser oder auf organischen Lösungsmitteln basierende Suspensionen keramischer oder metallischer Partikel in Frage. Konventionelle keramische Gießschlicker, z.B. wasserbasierte Porzellan, SiC, Al₂O₃, Si₃N₄ Schlicker mit ca. 60-80 Gewichts-% Feststoffanteil und mit einem Anteil (Gesamtanteil) von unter 5 Gewichts-% Additiven wie Dispergatoren, Binder, Entschäumern, Stabilisatoren etc.

Gemäß einer weiteren Ausführungsform umfasst die Konsolidierung einzelner zueinander benachbarter Abschnitte der kontinuierlichen Pulverschicht ein drop-on-demand Drucken eines Binders und/oder ein Applizieren einer Laserstrahlung.

Vorteile des Einbringens von Binder als Konsolidierungsmittel ergeben sich aus der Verfügbarkeit geeigneter Drucker(köpfe). Diese können frequenzgesteuert eine gewünschte Menge des Binders in die Pulverschicht einbringen, sodass nicht nur die Schicht lokal konsolidiert wird, sondern der konsolidierte Abschnitt auch mit einem bereits konsolidierten Abschnitt der vorigen Schicht verbunden wird. Analog gilt das für die mit Hilfe eines oder mehrerer Laser eingebrachten Laserenergie. Diese wie auch die Menge des absolut applizierten Binders werden so bemessen, dass eine erreichte Konsolidierung der zu einem Bauteilabschnitt zu verfestigenden Pulverschicht im gesamten Abschnitt der Schicht konstant ist. Insbesondere die drop-on-demand Drucktechnik erlaubt die Einstellung von einer konstanten Binderkonzentration unabhängig von einer Position im Pulverbett.

Gemäß einer weiteren Ausführungsform umfassen im Pulverbett miteinander in vertikalem Kontakt stehende konsolidierte Abschnitte der Pulverschicht zumindest einen Abschnitt des schichtweise ausgebildeten Bauteils.

Vorteile ergeben sich aus der erwachsenden Stabilität des 3-dimensionalen Bauteils. Verständlicherweise ist dessen Festigkeit erst gewährleistet, wenn auch die es ausbildenden konsolidierten Schichten untereinander verbunden sind.

Gemäß einer weiteren Ausführungsform werden alle Schritte einer Prozessfolge:
- kontinuierliches Auftragen des Schlickers in Form einer Schlickerschicht,
- kontinuierliche Entfeuchtung der aufgetragenen Schlickerschicht,
- Ausbilden einer kontinuierlichen Pulverschicht, und
- abschnittsweises Konsolidieren der Pulverschicht
zumindest teilweise parallel zueinander ausgeführt, nachdem einmal der gewünschte Schichtdickensollwert erreicht ist.

Vorteile ergeben sich aus einer gesteigerten Effektivität des Additivverfahrens.

Gemäß einer weiteren Ausführungsform werden im Pulverbett zumindest zwei separate Bauteile ausgebildet.

Vorteile dieser Ausführungsform sind offensichtlich. Parallel können mehrere gleichartige oder unterschiedliche Bauteile (Formkörper) ausgebildet werden.

Gemäß einer weiteren Ausführungsform ist im Pulverbett ein erstes Bauteil schichtweise als Grünkörper und parallel dazu ein zweites Bauteil schichtweise als Sinterkörper ausbildbar, indem die Konsolidierungseinheit einen Laser und einen Druckkopf umfasst, wobei der Druckkopf eingerichtet ist für ein drop-on-demand Drucken des Binders und der Laser angepasst ist für ein abschnittsweises Sintern exponierter Abschnitte der Pulverschicht.

Vorteile dieser Ausführungsform ergeben sich aus der weiter gesteigerten Flexibilität des Verfahrens. Vor allem bei einer Prozessoptimierung kann eine parallele Fertigung von Grünkörpern und von Sinterkörpern Kostenvorteile bieten. Diese Ausführungsform ermöglicht ebenso die kombinierte Anwendung von Druckkopf und Laser an ein und demselben Bauteil. Eine derartige Kombination kann für die Forschung und Entwicklung nützlich sein.

Gemäß einer weiteren Ausführungsform bildet das Pulverbett einen freistehenden Hohlzylinder, umfassend eine untere und eine obere Stirnfläche. Das Pulverbett zwischen der unteren und der oberen Stirnfläche umfasst somit eine im Hohlzylinder in einer Umfangsrichtung angeordnete Folge von schichtweise aufgebauten Bauteilen.

Gemäß einer weiteren Ausführungsform umfasst das vorgeschlagene Additivverfahren weiterhin den Schritt: Entnehmen und/oder Isolieren und/oder Freistellen und/oder Herauslösen (engl.: releasing) zumindest eines im Pulverbett durch abschnittsweises Konsolidieren ausgebildeten Bauteils durch ein Entfernen von nicht konsolidierten Anteilen der das Pulverbett ausbildenden Pulverschichten.

Vorteile dieser Ausführungsform erwachsen aus der zeitgleichen Entnahme (Entformung) mehrerer Bauteile aus dem Pulverbett.

Gemäß einer weiteren Ausführungsform ist der Schlicker ausgewählt unter einem silikatischen Keramikschlicker, unter einem Feinkeramiktonschlicker oder aus einer Suspension metallischer Partikel.

Vorteilhaft ist das vorgeschlagene Verfahren anwendbar für alle Schlickerarten, insbesondere für kommerziell erhältliche, für die Massenfertigung verwendete, Keramikschlicker und Feintonschlicker.

Erfindungsgemäß wird eine Vorrichtung zur additiven schlickerbasierten Fertigung vorgeschlagen, welche die folgenden Bestandteile umfasst: eine Schlickerauftragungseinheit; eine Arbeitsplattform; eine Antriebsvorrichtung; und eine Konsolidierungseinheit; wobei die Arbeitsplattform in einer horizontalen Arbeitsebene beweglich angeordnet ist; wobei die Antriebsvorrichtung eingerichtet ist, die Arbeitsplattform so zu bewegen, dass ein beliebiger Punkt der Arbeitsplattform einer stetigen in sich geschlossenen Kurve folgt, die einer Projektion der kontinuierlichen, d.h. stetigen und ununterbrochenen, Bewegungsbahn der Schlickerauftragungseinheit und/oder der kontinuierlichen Bewegungsbahn der Konsolidierungseinheit auf die Oberflächenebene der Arbeitsplattform entspricht.

Vorteile der Vorrichtung erwachsen besonders aus ihrer Einfachheit. Mit ihr ergeben sich einerseits geringe Kosten zu ihrer Erstellung, als auch geringe Betriebskosten, da eventuelle Reparaturen problemlos auszuführen sind.

Erfindungsgemäß sind die Schlickerauftragungseinheit und die Konsolidierungseinheit relativ zueinander starr anordenbar. Ein erster Abstand zwischen der Schlickerauftragungseinheit und der Arbeitsplattform, sowie ein zweiter Abstand zwischen der Konsolidierungseinheit und der Arbeitsplattform ist so einstellbar, dass mit einem Durchlaufen einer Runde der in sich geschlossenen Bahn der erste und der zweite Abstand um den Betrag eines Sollwertes einer Schlickerschichtdicke vergrößert wird.

Vorteile ergeben sich mit der modulartigen Bauweise der Vorrichtung. Die Schichtauftragungseinheit und die Konsolidierungseinheit können beispielsweise auf einer Plattform angeordnet sein. Auf ebendieser Plattform kann auch zusätzlich eine Entfeuchtungseinheit (Trockner) angeordnet sein. Das sichert eine Reproduzierbarkeit der ausgeführten Prozessschritte.

Gemäß einer weiteren Ausführungsform erfolgt der Schichtaufbau mittels einer kontinuierlichen Zuführung des Schlickers durch eine hohle Rakel, in der sich der Schlicker über die gesamte Auftragsbreite gleichmäßig verteilt und auf einer zum Schichtstapel offenen Seite der Rakel gleichförmig austritt, wobei die folgende Kante der Rakel, d.h. die Kante die in Fahrtrichtung dem Schlickerauftrag folgt, die Auftragsdicke (Schlickerschichtdicke) durch Abstreifen des Schlickers definiert.

Vorteile ergeben sich mit der über die gesamte Breite konstanten Schichtdicke.

Gemäß einer weiteren Ausführungsform ist die Schlickerauftragungseinheit so angepasst, dass mit dem fortgesetzten Schlickerauftrag ein Abstand zur Arbeitsplattform kontinuierlich vergrößert wird. Das kontinuierliche Vergrößern des Abstandes ist auf den Weg einer vollständigen Länge einer Schlickerspur auf der Arbeitsplattform bzw. auf einer Pulverschicht auf der Arbeitsplattform so angepasst, dass je Bahndurchlauf die Auftragungseinheit um genau einen Betrag einer Schlickerschichtdicke angehoben wird. Die Art dieser Anpassung ist dem Fachmann, beispielsweise, aus dem Fachgebiet der Mechanik vertraut. Eine Drehbewegung einer Welle kann beispielsweise über die Beteiligung eines Gewindes leicht in eine Linearbewegung umgesetzt werden. Ein Beispiel hierfür ist ein Schraubenschlitten bzw. eine Schraubenschlittenspindel.

Vorteile ergeben sich mit dem Erhalt eines lokal aus mehreren Schichten gleicher Dicke aufgebauten Pulverbetts.

Gemäß einer weiteren Ausführungsform ist die Projektion der kontinuierlichen Bewegung der Schlickerschichtauftragungseinheit (also ein vollständiger Bahndurchlauf) auf eine Ebene, die parallel zur Arbeitsplattform verläuft, durch einen Kreis beschreibbar. Mit anderen Worten ausgedrückt, folgt die Schlickerschichtauftragungseinheit einer konzentrischen Spiralbahn mit konstanten Radius und konstanter Steigung.

Vorteile ergeben sich aus der Vereinfachung des Antriebs. Beispielsweise kann die Arbeitsplattform durch einen einfachen elektrischen Antrieb in Rotation versetzt werden.

Gemäß einer weiteren Ausführungsform ist die Arbeitsplattform eine um einen Mittelpunkt drehbar gelagerte Scheibe, oder die Arbeitsplattform wird durch die Stirnfläche einer vertikal und um ihre Symmetrieachse drehbar angeordnete Walze gebildet.

Vorteile wurden vorstehend benannt.

Gemäß einer anderen Ausführungsform umfasst die Vorrichtung zusätzlich eine Entfeuchtungsvorrichtung, beispielsweise einen IR-Strahler, einen Ventilator, einen Lüfter und/oder einen Heizlüfter.

Vorteilhaft erleichtert die Entfeuchtungsvorrichtung das kontinuierliche Trocknen der frisch aufgetragenen Schlickerschicht und die Ausbildung der kontinuierlichen Pulverschicht.

Erfindungsgemäß wird die Verwendung einer Arbeitsplattform und einer Schlickerauftragungseinheit zur Erzeugung eines schichtweise aufgebauten Pulverbetts vorgeschlagen. Hierbei umfasst die Arbeitsplattform eine planare Arbeitsoberfläche, und die Schlickerauftragungseinheit ist in orthogonaler Richtung zur planaren Arbeitsoberfläche beweglich angeordnet. Hierbei wird das Pulverbett durch ein kontinuierliches auf sich selbst Stapeln einer von der Schlickerauftragungseinheit erzeugten Schlickerspur ausgebildet, indem mit einem vollständigen Absolvieren eines Verfahrweges der Arbeitsplattform relativ zur Schlickerauftragungseinheit die Schlickerauftragungseinheit einen Anfang der Schlickerspur wiedertrifft und den Verfahrweg zum Auftrag der zweiten, dritten und letztlich n-ten Schicht zum zweiten, dritten und letztlich n-ten Mal abfährt. Dabei wird die Schlickerspur erneut auf der bereits zuvor abgelegten Schlickerspur abgelegt. Dabei bleibt eine Schichtdicke der Schlickerspur nach dem ersten vollständigen Absolvieren des Verfahrweges der Arbeitsplattform konstant. Das wird dadurch erreicht, dass ein Abstand zwischen der Schlickerauftragungseinheit und der planaren Arbeitsoberfläche während des vollständigen Absolvierens des Verfahrweges kontinuierlich um die Schichtdicke vergrößert wird. Hierbei wird die solcherart kontinuierlich erzeugte Schlickerspur nach dem Stapeln kontinuierlich entfeuchtet und abschnittsweise konsolidiert, sodass nach dem (n+1)ten Absolvieren des Verfahrweges zumindest ein konsolidiertes Bauteil dem Pulverbett entnehmbar ist.

Vorteile dieser Ausführungsform wurden bereits vorstehend benannt.

Erfindungsgemäß weisen einzelne aufeinander gestapelte Schichtabschnitte des Pulverbetts, bezogen auf die Arbeitsplattformoberfläche, eine konstante Steigung auf, wobei diese konstante Steigung einem Quotienten aus der Schichtdicke und der Länge einer beim vollständigen Absolvieren des Verfahrweges von der Schichtauftragungseinheit absolvierten Wegstrecke entspricht.

Vorteile dieser Ausführungsform wurden bereits benannt.

Die vorstehend beschriebenen Ausführungsformen können beliebig miteinander kombiniert werden.

In den letzten Jahren haben sich die Anforderungen an die Fertigungsindustrie, insbesondere im Bereich der Entwicklung und der Prototypenherstellung stark gewandelt. Die zunehmende Anzahl an Produktvarianten, bei einer größeren Komplexität, lässt den Bedarf an Prototypen ständig steigen. Unter dem Leitbegriff "Rapid Prototyping" oder "Rapid Manufacturing" sind eine Vielzahl neuartiger Technologien entstanden, mit deren Hilfe sich der Anspruch an flexiblere Fertigung realisieren lässt. Die wesentlichen Merkmale dieser Verfahren sind die Erstellung von Prozesssteuerdaten aus CAD-Geometriedaten mit anschließender Steuerung von Bearbeitungseinrichtungen. Allen diesen Verfahren sind folgende Merkmale gemein:
1: Die Formgebung geschieht nicht durch Materialabtrag, sondern durch Zugabe von Material, oder durch den Phasenübergang eines Materials von flüssig nach fest bzw. es findet eine Kompaktierung eines pulverförmigen Ausgangsmaterials statt.
2: Alle Verfahren bauen Teilgeometrien aus Schichten endlicher Dicke direkt aus CAD-Daten auf, wobei die CAD-Daten durch einen Slice-Prozess realisiert werden.

Die heute zur Verfügung stehenden Verfahren unterscheiden sich im Ausgangszustand der Materialien (fest, flüssig, pastös) bei der Schichtenaddition bzw. dem Bauprozess. Es gibt eine Vielzahl von Verfahren, die als Ausgangsmaterial ein festes pulverförmiges Material einsetzen. Bei der Verwendung trockner rieselfähiger Pulverfür den Schichtauftrag werden dabei Schichten mit nur geringer Packungsdichte der Pulverpartikel erzielt. Eine typische Packungsdichte liegt zwischen 30 und 50%.

Aus US 6,827,988 B2 ist ein Verfahren bekannt, welches Suspensionen mit geringem Anteil an organischen Additiven zum Schichtauftrag verwendet. Weiter sind sogenannte LSD (Lagenweise Schlicker Deposition) Verfahren bekannt. Dabei werden keramische Grünschichten über ein an das Foliengießen angelehntes Verfahren erzeugt. Wie beim selektiven Lasersintern wird einLaser zur lokalen Verfestigung und/oder Versinterung der keramischen Grünschichten eingesetzt. Dabei erhaltene Grünschichten haben eine Packungsdichte der Pulverpartikel von über 50%. In Kombination mit einem Druckkopf ist ebenfalls dieser Schichtauftrag zum Patent angemeldet PCT/EP2012/060420.

Die hier beschriebene Erfindung betrifft ein Verfahren, welches den Aufbau eines frei stehenden Pulverbetts mittels der LSD Technologie vorsieht. Abweichend von bekannten Verfahren wird jedoch ein kontinuierlicher Schichtauftrag von der ersten das Bauteil formenden Schicht bis zur letzten das Bauteil formenden Schicht vorgeschlagen.

Der LSD Prozess verwendet Suspensionen von Partikeln (nachfolgend Schlicker genannt), um diskrete Pulverschichten mit einer hohen Packungsdichte der Pulverpartikel aufzubauen und nacheinander zu stapeln. Dabei steht die Abkürzung LSD für "Lagenweise Schlicker Deposition". Auf die typischerweise quadratische oder rechteckige Arbeitsplattform wird mittels einer Schlickerauftragungseinheit, auch bezeichnet als **Rakeleinheit** oder Rakel (engl. doctor blade) eine Schlickerschicht aufgetragen und getrocknet. Anschließend werden die Pulverpartikel mittels Lasersintern oder Einspritzen eines Binders lokal konsolidiert, d.h. verfestigt. Für jede Schicht muss der Schlicker erneut zur Rakeleinheit gefördert werden. Dabei geht ein gewisser Überschuss an Schlicker, der sich unvermeidlich vor der Rakel aufbaut und im jeweiligen Schichtauftragprozess nicht verbraucht wird, verloren.

Während des Schichtauftrags muss der Druckkopf aus dem Arbeitsbereich der Rakel gefahren und geparkt werden. Das gleiche gilt für die Rakeleinheit wenn der Druckkopf oder der Laser arbeiten. Die hierdurch bedingten Verfahrwege kosten Zeit. Zudem können Rakel und Druckkopf beim Parken eintrocknen und müssen durch spezielle Technologien abgedeckt und frisch gehalten werden. Aus der WO-A-98/56566 ist ein Schlickerbasiertes Additivverfahren gemäß dem Oberbegriff des Anspruchs 1 bekannt. Diese Druckschrift offenbart auch eine Vorrichtung zur additiven schlickerbasierten Fertigung gemäß dem Oberbegriff des Anspruchs 13 sowie eine Verwendung einer Arbeitsplattform und einer Schlickerauftragungseinheit zur Erzeugung eines Schichtweise aufgebauten Pulverbetts gemäß dem Oberbegriff des Anspruchs 18.

Es ist daher Aufgabe der vorliegenden Erfindung, ein Verfahren zur additiven Fertigung mit kontinuierlichem Schichtauftrag bereitzustellen.

Die beiliegenden Zeichnungen veranschaulichen eine beispielhafte Ausführungsform und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

Figur 1 zeigt eine Draufsicht auf eine rotierende, hier scheibenförmige, Arbeitsplattform 10 mit Rakel 20, Druckkopf 30 und dem Schichtstapel 40.

Figur 2 zeigt schematisch die Ansicht der ersten Schicht 40a des mit der beschriebenen Vorrichtung auf der Arbeitsplattform (nicht gezeigt) erzeugten helicalen Schichtstapels 40.

Figur 3 zeigt einen Schichtstapel mit darin eingeschlossenen durch schichtweises Konsolidieren erzeugten Formkörpern.

Fig. 4 zeigt eine Seitenansicht der in Fig. 1 gezeigten rotierenden Arbeitsplattform mit dem Schichtstapel 40 und der Rakel 20.

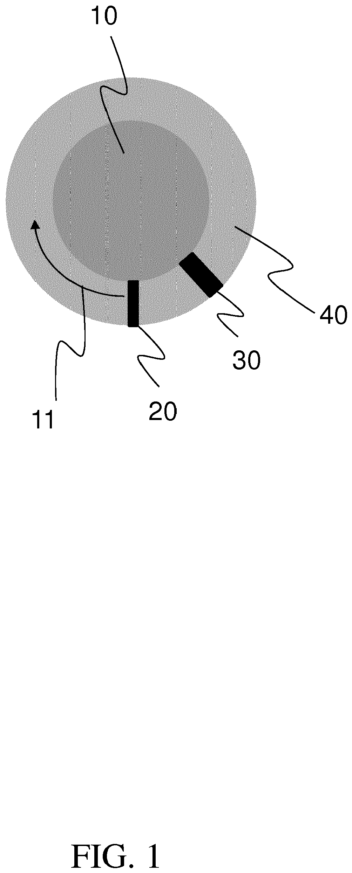

Insbesondere zeigt Fig. 1 eine rotierende Arbeitsplattform 10, hier in Form einer kreisrunden Scheibe 10. Auf einem äußeren Kreisring der stetig in einer Rotationsrichtung 11 rotierenden Scheibe 10 wird mit Hilfe einer Rakel 20 kontinuierlich eine Abfolge von helical aufeinander gestapelten Abschnitten einer kontinuierlichen Schlickerschicht 40 erzeugt.

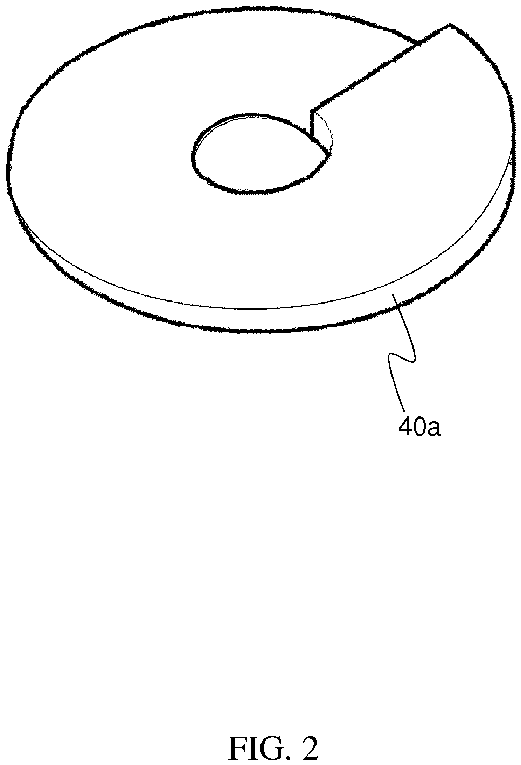

Die Fig. 2 illustriert das gemäß einem bevorzugten Ausführungsbeispiel erreichte Einstellen der Schichtdicke des helicalen Schichtstapels. Die erste Schlickerschicht beginnt auf der Arbeitsplattform mit der Dicke Null und wächst in Umfangsrichtung mit einer vollständigen Drehung der Arbeitsplattform auf die volle Schichtdicke an. Damit ist gemäß typischen Ausführungsformen die Schichtdicke ab der zweiten Lage konstant. Typischerweise liegt die Schichtdicke im Bereich von 20 bis 200 µm. Sie kann beispielsweise 50 µm, 100 µm oder 150, ebenso aber auch 175 µm betragen. Für Silikatfeinkeramik haben sich beispielsweise Schichtdicken von 100 µm bewährt. Die dann in vertikaler Richtung kontinuierlich aufeinander folgenden Schlickerschichten sind konzentrisch zueinander angeordnet, weisen eine konstante Breite (z.B. konstante innere und äußere Radien für das gezeigte Beispiel) und eine ab der zweiten Schlickerschicht konstante Schichtdicke auf. Die kontinuierlich ineinander übergehenden kreisringförmigen Schlickerschichten bilden somit einen schraubenförmig gewunden Schichtstapel aus, der einen Hohlzylinder, bzw. eine Zylinderwand ausbildet. Mit anderen Worten ausgedrückt wird eine vertikal angeordnete helicale "Wicklung" einer kontinuierlichen Schlickerschicht erzeugt.

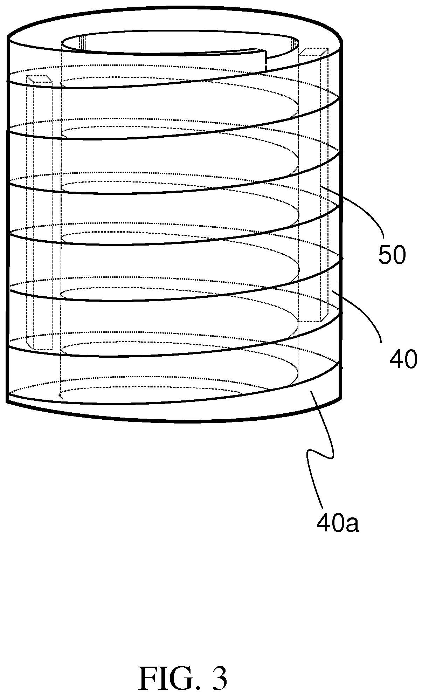

Die Fig. 3 zeigt eine Seitenansicht eines hohlzylinderförmigen Schichtstapels vor Entnahme der im Hohlzylinder selbst zwischen den beiden kreisringförmigen Stirnflächen konsolidiert vorliegenden Bauteile 50. Die äußere Form des Schichtstapels erinnert an die eines ungarischen Baumkuchens. Die Ausbildung der letzten (obersten) Schicht wird gestoppt indem zuerst die Konsolidierung gestoppt wird und dann der Schichtauftrag. Dies führt zu einem leicht abgeschrägten Abschluss des Bauteils (das ganze Bauteil ist verzerrt), jedoch beträgt diese Abschrägung z.B. bei einer Arbeitsplattform in Form einer Scheibe von 1 m Durchmesser nur 100µm auf ca. 3,4 m Länge, beträgt also bei einem Bauteil mit einer Kantenlänge von 200 mm nur ca. 6 µm und ist damit vernachlässigbar gering.

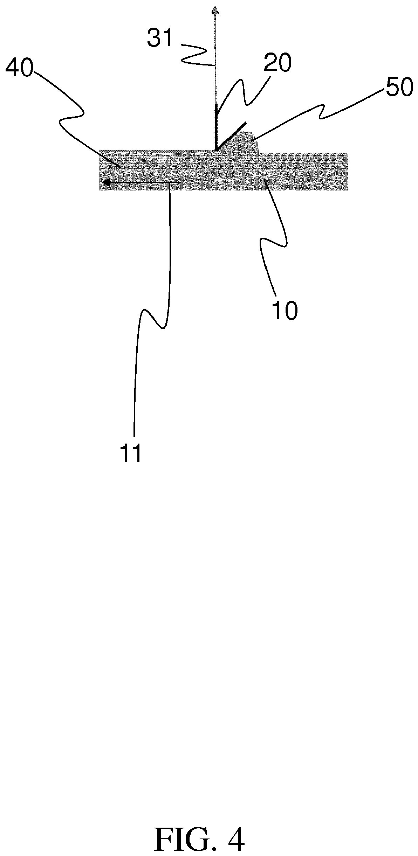

Die Fig. 4 zeigt eine Seitenansicht der rotierenden Arbeitsplattform (hier einer Scheibe 10 mit dem Schichtstapel 40 und der Rakel 20. Die Rakel 20 glättet den vor der Rakel sich anhäufenden Schlicker 50 auf die eingestellte Schichtdicke. Dazu bewegt sich die Rakel 20 in der Bewegungsrichtung 31 in vertikaler Richtung vom sich ausbildenden Schichtstapel weg.

Gemäß einer Ausführungsform einer geeigneten Vorrichtung wird im Unterschied zu bekannten Verfahren der Erzeugung von gestapelten Schlickerschichten also die Arbeitsplattform nicht in diskreten Schritten relativ zur Rakel abgesenkt, sondern die Rakel wird gegenüber der Bewegungsebene der Arbeitsplattform kontinuierlich angehoben. Die Geschwindigkeit des Anhebens der Rakel 20 in Relation zur Rotationsebene der Scheibe 10 ist an die Umlaufgeschwindigkeit der rotierenden Scheibe 10 angepasst. Dabei erfolgt das Anheben der Rakel 20 so, dass die Dicke der unter der Rakel erzeugten Schlickerschicht 40 nach dem ersten Erreichen der gewählten Schichtdicke konstant bleibt. Wie aus Fig. 2 ersichtlich, wird die angestrebte Schichtdicke mit einer vollständigen Umdrehung der Scheibe 10 erreicht.

Gemäß typischen Ausführungsformen hat die rotierende Scheibe einen Durchmesser von bis zu 2 Metern. Es sind aber auch größere Durchmesser der Scheibe realisierbar, beispielsweise bis zu 5 m. Ebenso sind kleiner Durchmesser der Scheibe möglich, beispielsweise 10 cm, 25 cm oder Durchmesser im Bereich von 100 mm bis 1500 mm.

Statt wie bisher üblich, eine quadratische oder rechteckige Fläche mit einer Schlickerschicht zu belegen, wird am Rand der sich drehenden Scheibe 10 oder auf der kreisförmigen Stirnfläche einer sich drehenden zylindrischen Walze oder auf einer sich kontinuierlich bewegenden mehr oder weniger festen Unterlage, auf einer starren Platte oder auf einer Scheibe, auf einem Förderband etc. eine Schlickerspur 40 abgelegt. Das erfolgt derart, dass nach einer vollständigen Umdrehung der Scheibe oder einer anders gearteten Periode eines komplexen Verfahrwegs die Rakel 20 den Anfang der Schlickerspur wiedertrifft und diesen Verfahrweg zum Auftrag der zweiten, dritten und letztlich n-ten Schicht zum zweiten, dritten oder n-ten Mal abfährt. Dabei wird die Schlickerspur erneut auf der bereits zuvor abgelegten Schlickerspur abgelegt.

Mit anderen Worten ausgedrückt, wird eine Schlickerspur mit konstanter Schichtdicke kontinuierlich entlang einer geschlossenen Kurvenbahn abgeschieden und dabei fortlaufend auf sich selbst abgelegt und erscheint somit als gestapelt.

Hierbei wird die Rakel in einer senkrechten Richtung zur Schlickerspur kontinuierlich von der Schlickerspur wegbewegt. Pro Umdrehung der Scheibe oder Walze oder pro Periode eines komplexeren Verfahrweges wird die Rakel jeweils um eine weitere Schichtdicke von der Arbeitsplattform wegbewegt. Der Verfahrweg umfasst somit stets eine geschlossene Kurvenbahn. Die Schichtdicke ist erst konstant, nachdem während eines ersten Durchlaufens der geschlossenen Kurvenbahn die Schichtdicke auf der Arbeitsplattform kontinuierlich von Null auf den Sollwert der Schichtdicke angehoben wurde. Daraus ergibt sich eine definierte Steigung bzw. Schräge aller aufeinander liegenden Abschnitte der Schlickerschicht gegenüber der Horizontalebene der Arbeitsplattform.

Verfahrensbedingt legt die Rakeleinheit nach der ersten Umdrehung oder Periode die Schlickerspur nicht mehr auf die unterstützende Unterlage oder Platte ab, sondern auf die bereits abgelegte, getrocknete und partiell bedruckte und/oder partiell laserbestrahlte Schlickerspur. Die zuvor bereits abgelegte Schlickerspur ist also inzwischen entfeuchtet oder getrocknet und wurde zumindest auf die Tiefe einer Partikelschicht entsprechend einer, beispielsweise mittels SLICE-Vorgang definierten, Schicht eines Schicht-Modells des angestrebten Bauteils konsolidiert. Die Begriffe Rakel, Rakeleinheit und Schlickerauftragungseinheit werden nachfolgend synonym benutzt, wobei eine Rakel bzw. eine Rakeleinheit bestimmte, dem Fachmann bekannte Ausführungsformen der Schlickerauftragungseinheit sind.

Mit dem kontinuierlichen Auftrag von Schichten auf einer sich drehenden Scheibe oder zylindrischen Walze entsprechend der angefügten Zeichnungen kann nun die Rakeleinheit von der ersten bis zur letzten Schicht kontinuierlich Schlicker als Schicht auftragen. Parallel zum Schichtauftrag erfolgt in einem zuvor abgelegten Abschnitt der Schicht das Trocknen oder Entfeuchten der Schicht und das Einspritzen von Binder, Drucken mit Binder oder Lasersintern der Strukturen im kontinuierlich lagenweise aufgebauten Pulverbett.

Es ist ersichtlich, das auf diese Art und Weise ein frei stehendes Pulverbett erzeugt wird, das zumindest ein Bauteil, typischerweise jedoch eine Vielzahl von Bauteilen einschließt und stützt. Nach Abschluss des Verfahrens können diese Bauteile dem Pulverbett entnommen werden. In Abhängigkeit vom gewählten Konsolidierungsverfahren stellen die Bauteile Grünkörper und/oder Sinterkörper dar.

Wesentliche Vorteile dieses Verfahrens sind nachfolgend angeführt:
Die Rakeleinheit wird mit einem kontinuierlichen Fluss an Schlickermaterial versorgt. Das stabilisiert den Rakelprozess. Zudem kann die Rakel nicht mehr eintrocknen, da der zuvor benötigte Parkvorgang vermieden wird. Die bisher erforderlichen zeitaufwendigen Verfahrwege aus der Arbeitsposition in die Parkposition und zurück werden vermieden.

Der Druckkopf wird ebenfalls kontinuierlich betrieben, was seine Nutzungszeit als teuerste Einheit im Prozess optimiert. Zudem muss auch er nicht geparkt und abgedeckt werden, was erneut Zeit spart.

Die Vorteile des beschriebenen Verfahrens umfassen somit:
1) Kontinuierliches Ablegen einer Pulverschicht für den 3D Druck oder das selektive Lasersintern mit annähernd kontinuierlichem Betrieb des Druckkopfes und/oder des Lasers von der ersten Schicht des Bauteils bis zur letzten.
2) Beschleunigung des 3D Druckprozesses.
3) Wegfall von Wartezeiten für die Rakeleinheit, den Druckkopf und/oder den Laser.
4) Vermeiden des Eintrocknens von Rakel oder Druckkopf in Parkposition.
5) Vermeiden oder zumindest Verringern von Materialverlusten des Schlickers durch überschüssigen Schlicker.

Die Besonderheiten des beschriebenen Verfahrens können eine gewisse Verzerrung des Arbeitsraums bedingen. Diese Verzerrung kann jedoch mit Hilfe des der Steuerung zu Grunde gelegten Rechnermodells korrigiert werden.

Es ist eine weitere Besonderheit des vorgeschlagenen Verfahrens, dass lediglich bei lokaler Betrachtung eine als Stapel erscheinende Anordnung von aufeinander liegenden Schichten eines Schlickerbetts erzeugt wird. Bei vollständiger Betrachtung des beispielsweise auf einer rotierenden Arbeitsplattform erzeugten Pulverbetts mit letztendlich darin angeordneten konsolidierten Bauteilen wird eine kontinuierlich erzeugte Schlickerschicht einer kreisförmigen Bahn mit konstantem Radius folgend, kontinuierlich auf sich selbst gestapelt. Parallel dazu wird jeweils in dem zuvor abgelegten Abschnitt der kontinuierlichen Schlickerschicht immer derjenige Abschnitt konsolidiert, der genau einem und demselben Bauteil in dem darunter angeordneten Abschnitt der kontinuierlichen Schlickerschicht (bzw. Pulverschicht) entspricht. Wie bereits erwähnt, können jedoch auch andere als kreisförmig verlaufende Verfahrwege der in einer Ebene verfahrenen Arbeitsplattform realisiert werden. Verfahrenskennzeichnend ist die kontinuierlich erzeugte Schlickerschicht, die wiederholt auf sich selbst abgelegt wird. Nach dem Abschluss des Verfahrens liegen im fertiggestellten Schlickerbett dann mehrere gleiche oder mehrere unterschiedliche konsolidierte oder bereits gesinterte Bauteile vor. Die konsolidierten oder bereits gesinterten Bauteile können dem Schlickerbett entnommen werden und abschließend gesintert werden.

Gemäß der in den Figuren 1 - 3 gezeigten beispielhaften Ausführungsform rotiert die Arbeitsplattform, auf welcher der kontinuierlich spiralförmige, einer Schraubenbahn folgende Schichtstapel erzeugt wird, in einer horizontalen Ebene. Die Rotation erfolgt bevorzugt mit einer konstanten Geschwindigkeit. Zweckmäßig ist die Arbeitsplattform als runde Platte oder Scheibe ausgebildet. Vorteilhaft sind die Kosten für die Bereitstellung der entsprechenden Vorrichtung gering.

Gemäß anderen Ausführungsformen kann die Arbeitsplattform aber auch eine andere Form, als eine kreisrunde Scheibe aufweisen. Verfahrenswesentlich ist, dass die Arbeitsplattform sich stets in ein und derselben Ebene bewegt (verfahren wird), während die Rakel schichtweise angehoben wird. Weiter ist das vorgeschlagene Verfahren dadurch gekennzeichnet, dass die Bewegung der Arbeitsplattform so angepasst ist, dass die unter der Konsolidierungseinheit, also unter dem Druckerkopf oder Laser ankommende Schicht bereits trocken ist, sodass sie mit Binder lokal bedruckt, bzw. mit dem Laser ohne ein unbeabsichtigtes Verspritzen von Pulver lokal gesintert werden kann.

Die Schichtauftragungseinheit, umfassend eine Rakel, und die Konsolidierungseinheit, umfassend einen Druckkopf oder einen Laser, sind relativ zueinander fixiert, also starr angeordnet. Der Druckkopf umfasst bevorzugt zumindest eine drop-on-demand Düse, kann jedoch auch mehrere voneinander unabhängige drop-on-demand Düsen umfassen, deren Steuerfrequenz unterschiedlich ist.

Für die in den Figuren gezeigte Ausführungsform legt ein äußerer Abschnitt des Druckkopfes einen größeren Weg zurück, als ein innerer Abschnitt des Druckkopfes. Das kann bei konstanter Druckgeschwindigkeit (Tropfenzahl je Zeiteinheit) zu einer relativen Verdünnung des Binders am äußeren Rand des helicalen Schichtstapels führen. Mit Hilfe eines mehrere Untereinheiten (Düsen) umfassenden Druckkopfes mit jeweils angepasster Tropfenzahl je Zeiteinheit oder durch eine angepasste Steuerfrequenz des Druckkopfes kann das kompensiert werden. Dabei ist eine Steuerfrequenz (Tropfenzahl je Zeiteinheit) an einem äußeren Abschnitt des Druckkopfes höher, als an einem innen liegenden Abschnitt. Die Begriffe äußerer Abschnitt und innen liegender Abschnitt beziehen sich hierbei auf die Entfernung zur Rotationsachse der Scheibe bzw. zu einer zentralen Achse des durch kontinuierliche lagenweise Schlickerdeposition erzeugten Hohlzylinders. Ebenso kann beispielsweise durch einen abschnittsweise mitlaufenden Druckkopf die scheinbare Verzerrung des Arbeitsraumes kompensiert werden.

Vorteilhaft ist der technische Aufwand für die Bereitstellung einer Arbeitsplattform in Form einer rotierenden Scheibe gering und erfordert vergleichsweise geringe Kosten. Die Kosten für die Schichterzeugungseinheit (beispielsweise eine Hohlrakel) mit kontinuierlicher Schlickerzufuhr und für die Konsolidierungseinheit (Druckkopf oder Laser) entsprechen jenen für konventionelle Anlagen.

Die Erfindung umfasst den Gedanken eines Verfahrens zum Herstellen eines metallischen oder keramischen Bauteils, wobei das Verfahren die folgenden Schritte aufweist:
- Ausbilden eines Bauteils aus einem metallischen oder keramischen Material, indem die folgenden Schritte ausgeführt werden:
- Kontinuierliches Auftragen entlang einer in sich geschlossenen Kurve einer Schicht einer Suspension aus metallischen oder keramischen Partikeln, die in einer Suspensionsflüssigkeit dispergiert sind, und Ausbilden eines frei stehenden Pulverbettes (Arbeitsvolumen),
- kontinuierliches Entfeuchten des zuletzt aufgetragenen Schichtabschnitts im Arbeitsvolumen und
- lokales Aufbringen auf den getrockneten Schichtabschnitt und Aushärten eines Bindemittels einem Schichtmodell des herzustellenden Bauteils entsprechend, derart, dass Partikel in dem getrockneten Schichtabschnitt untereinander und wahlweise zusätzlich mit Partikeln mindestens eines unter dem getrockneten Schichtabschnitt liegenden Schichtabschnitts lokal haftend verbunden werden, und
- Entformen des Bauteils, indem bindemittelfreies Restmaterial von den mit Hilfe des Bindemittels untereinander verbundenen Partikeln gelöst wird.

Gemäß einem weiteren Aspekt der Erfindung umfasst das Erzeugen des Bauteils das lokal begrenzte Aufbringen eines die Löslichkeit des Partikelmaterialhaufwerks ändernden flüssigen Bindemittels. Dabei wird unter dem Partikelmaterialhaufwerk das Partikelmaterial bzw. das Pulverbett verstanden. Dieses - gemäß dem Schichtmodell des herzustellenden Bauteils -lokal begrenzte Aufbringen des die Löslichkeit des Partikelmaterials ändernden flüssigen Bindemittels bewirkt, dass sich die Löslichkeit des Partikelmaterials des betreffenden Schichtabschnitts gegenüber der Löslichkeit der nicht mit dem Bindemittel versehenen Partikel ändert, bzw. sich die Löslichkeit betreffender Anteile der gestapelten Schichtabschnitte ändert.

Damit wird die Löslichkeit der für den Aufbau des Bauteils selbst bestimmten Abschnitte der Partikelschicht geändert. Beim Entformen umgebenden Partikelmaterials bildet sich somit das Bauteil heraus. Nach einem weiteren Aspekt der Erfindung ist eine Vorrichtung zum Herstellen eines metallischen oder keramischen Bauteils mit den folgenden Merkmalen geschaffen:
- einem Vorratsvolumen, welches konfiguriert ist, eine Suspension aus metallischen oder keramischen Partikeln aufzunehmen, die in einer Suspensionsflüssigkeit dispergiert sind,
- eine schichtbildende Auftragseinrichtung, welche konfiguriert ist, kontinuierlich eine Suspensionsmenge aus dem Vorratsvolumen zu entnehmen und mit der Auftragseinrichtung umfassend eine Hohlrakel kontinuierlich als Schicht abzulegen, wobei ein freistehendes Pulverbett (Arbeitsvolumen) ausgebildet wird,
- eine Entfeuchtungseinrichtung, welche konfiguriert ist, den zuletzt aufgetragenen Schichtabschnitt im Arbeitsvolumen zu entfeuchten,
- eine Bindemittel-Austrageinrichtung, welche konfiguriert ist, ein Bindemittel einem Schichtmodell des herzustellenden Bauteils entsprechend auf den entfeuchteten Schichtabschnitt lokal aufzutragen, derart, dass Partikel im entfeuchteten Schichtabschnitt untereinander und wahlweise zusätzlich mit Partikeln mindestens eines unter dem entfeuchteten Schichtabschnitt liegenden älteren Schichtabschnitts lokal haftend verbunden werden, und
- optional eine Entformungseinrichtung, welche konfiguriert ist, das Bauteil zu entformen, indem bindemittelfreies Restmaterial von den mit Hilfe des Bindemittels untereinander verbundenen Partikeln gelöst wird.

Bei dem vorgeschlagenen Verfahren wird das metallische oder keramische Bauteil in einem hinsichtlich der äußeren Gestaltung des herzustellenden Bauteils formfreien Arbeitsvolumen (Pulverbett) erzeugt. Dabei wird eine kontinuierlich erzeugte Schicht einer Suspension aus metallischen oder keramischen Pulverpartikeln, die in einer Suspensionsflüssigkeit dispergiert sind, einer in sich geschlossenen Kurvenbahn folgend kontinuierlich auf sich selbst abgelegt bzw. aufgetragen. Nach dem Auftragen erfolgt jeweils eine Trocknung des zuletzt aufgetragenen Schichtabschnittes, worauf dann ein Bindemittel lokal aufgebracht wird, um die Partikel im getrockneten Schichtabschnitt untereinander dem Schichtmodell des herzustellenden Bauteils entsprechend zu verbinden. Bevorzugt erfolgt der Auftrag des Bindemittels derart, dass das Bindemittel sich nicht nur in den vorgesehenen Bereichen des getrockneten Schichtabschnitts ausbreitet, sondern auch in einem oder mehreren darunterliegende Schichtabschnitten. So wird erreicht, dass der aktuell aufgetragene Schichtabschnitt an die darunterliegenden Schichtabschnitte angebunden wird.

Die Verteilung des Bindemittels kann beispielsweise mit Hilfe einer angepassten Steuerfrequenz von drop-on-demand Druckerdüsen eingestellt werden, mit denen das Bindemittel tropfenweise auf den getrockneten Schichtabschnitt aufgetragen wird. Das lokale Auftragen des Bindemittels wird einem elektronischen Datensatz für das Schichtmodell des herzustellenden Bauteils entsprechend gesteuert. In dem Schichtmodell ist das herzustellende Bauteil vorher in Schichten zerlegt, woraus ein für den Herstellungsprozess angepasster Datensatz zur Steuerung des Verfahrens abgeleitet ist. Die Bereitstellung des Schichtmodells ist als solche bekannt und wird hier deshalb nicht weiter erläutert.

Knapp zusammengefasst ist das vorgeschlagene Verfahren durch die folgenden Stichpunkte charakterisierbar:
1. Kontinuierlich erfolgender Schichtauftrag;
2. kontinuierlich vollzogener Druckprozess und/oder
3. kontinuierlicher Lasersinterprozess;
4. freistehendes Pulverbett, wobei das Pulverbett keinen Kontakt zu Seitenwänden eines Arbeitsraumes hat.
5. Pulverschichten hoher Packungsdichte, wobei die Packungsdichte größer oder gleich 60 % einer theoretischen Dichte der verwendeten Keramik oder Keramikmischung (bzw. Metallpartikelmischung) ist.

Gemäß einer typischen Ausführungsform wird mithin ein Verfahren zum Herstellen bzw. Erzeugen eines Bauteils, eines Formkörpers bzw. eines Grünkörpers vorgeschlagen, wobei eine Dichte des Bauteils, des Formkörpers oder des Grünkörpers mindestens 60% der mittleren Materialdichte einer keramischen Komponente einer Suspension beträgt, wenn die Dichte als Quotient aus einer Masse des Bauteils, des Formkörpers oder des Grünkörpers und dessen Volumen, das an Hand von äußeren Konturen des berechnet wird, definiert ist. Im Falle von Aluminiumoxid (Al₂O₃) mit einer theoretischen Dichte von 3,94 g·cm⁻³ bedeutet dies, dass mittels Schlickerdeposition schichtweise aufgebaute Al₂O₃-Grünkörper eine Dichte größer als 2,36 g·cm⁻³ aufweisen.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

### Bezugszeichenliste

- 10: Arbeitsplattform, rotierende Scheibe
- 11: Rotationsrichtung
- 20: Rakel, Rakeleinheit, Schlickerauftragungseinheit, Schichtauftragungseinheit
- 30: Konsolidierungseinheit, Druckkopf, Laser
- 40: Schichtstapel, mittels Schlickerguss erzeugte Pulverschicht
- 40a: erste, mittels Schlickerguss erzeugte Pulverschicht; einzige Schlickerschicht, die unmittelbar auf die Arbeitsplattform aufgetragen wird; bzw. einzige Pulverschicht, die in unmittelbarem Kontakt zur Arbeitsplattform steht.
- 50: Formkörper, Bauteil

## Patentansprüche

1. Schlickerbasiertes Additivverfahren zur Erzeugung eines schichtweise aufgebauten Bauteils (50) in einem Pulverbett, umfassend ein kontinuierliches Auftragen eines Schlickers in Form einer Schlickerschicht entlang einer in sich geschlossenen Bahn,
wobei das Pulverbett auf einer Arbeitsplattform (10) angeordnet ist,
wobei die kontinuierlich aufgetragene Schlickerschicht kontinuierlich einer Entfeuchtung unterzogen wird und dabei eine kontinuierliche Pulverschicht (40) ausbildet, und
wobei einzelne zueinander benachbarte Abschnitte der kontinuierlichen Pulverschicht einer Konsolidierung unterzogen werden,
sodass das schichtweise aus konsolidierten Abschnitten der Pulverschicht aufgebaute Bauteil vom Pulverbett umgeben ist,
wobei die kontinuierlich aufgetragene Schlickerschicht unmittelbar auf der Arbeitsplattform (10) aufgetragen wird, solange die Bahn zum ersten Mal abgefahren wird und die Schlickerschicht sodann jeweils auf einem neuen Abschnitt der zuvor ausgebildeten kontinuierlichen Pulverschicht (40) aufgetragen wird,
**dadurch gekennzeichnet, dass** eine Schichtdicke der kontinuierlich unmittelbar auf der Arbeitsplattform aufgetragenen Schlickerschicht von einem Schichtdickenminimalwert stetig auf einen Schichtdickensollwert ansteigt.

2. Schlickerbasiertes Additivverfahren nach Anspruch 1, wobei eine Projektion eines beim Auftragen des Schlickers von einer Schlickerauftragungseinheit in Relation zu einem festen Punkt auf der Arbeitsplattform (10) zurückgelegten Weges auf eine Ebene, die parallel zur Arbeitsplattform angeordnet ist, die in sich geschlossene Bahn bildet, sodass die Schlickerauftragungseinheit nach einem Durchlaufen der ersten Runde der Bahn die Schlickerschicht jeweils auf einem neuen Abschnitt der zuvor ausgebildeten Pulverschicht aufträgt.

3. Schlickerbasiertes Additivverfahren nach einem der vorstehenden Ansprüche, wobei die Schichtdicke der Schlickerschicht, welche nicht unmittelbar auf der Arbeitsplattform, sondern jeweils auf einem neuen Abschnitt der zuvor ausgebildeten Pulverschicht aufgetragen wird, stets dem Schichtdickensollwert entspricht, sodass das kontinuierlich ausgebildete Pulverbett in einer Richtung, die zu einer Oberflächenebene der Arbeitsplattform orthogonal verläuft, einen Stapel von Pulverschichten von jeweils konstanter Dicke umfasst.

4. Schlickerbasiertes Additivverfahren nach einem der vorstehenden Ansprüche, weiter umfassend:
Bereitstellen eines Schlickers.

5. Schlickerbasiertes Additivverfahren nach einem der vorstehenden Ansprüche,
wobei die Konsolidierung einzelner zueinander benachbarter Abschnitte der kontinuierlichen Pulverschicht ein drop-on-demand Drucken eines Binders und/oder ein Applizieren einer Laserstrahlung umfasst.

6. Schlickerbasiertes Additivverfahren nach einem der vorstehenden Ansprüche,
wobei im Pulverbett miteinander in vertikalem Kontakt stehende konsolidierte Abschnitte der Pulverschicht zumindest einen Abschnitt des schichtweise ausgebildeten Bauteils (50) umfassen.

7. Schlickerbasiertes Additivverfahren nach einem der vorstehenden Ansprüche, wobei Schritte einer Prozessfolge, umfassend:
- kontinuierliches Auftragen des Schlickers in Form einer Schlickerschicht,
- kontinuierliche Entfeuchtung der aufgetragenen Schlickerschicht,
- Ausbilden einer kontinuierlichen Pulverschicht, und
- abschnittsweises Konsolidieren der Pulverschicht
nach dem Erreichen des Schichtdickensollwertes zumindest teilweise parallel zueinander ausgeführt werden.

8. Schlickerbasiertes Additivverfahren nach einem der vorstehenden Ansprüche , wobei im Pulverbett zumindest zwei separate Bauteile ausgebildet werden.

9. Schlickerbasiertes Additivverfahren nach einem der vorstehenden Ansprüche,
wobei im Pulverbett ein erstes Bauteil schichtweise als Grünkörper und parallel dazu ein zweites Bauteil schichtweise als Sinterkörper ausbildbar ist, indem die Konsolidierungseinheit einen Laser und einen Druckkopf umfasst,
wobei der Druckkopf eingerichtet ist für ein drop-on-demand Drucken des Binders und der Laser angepasst ist für ein abschnittsweises Sintern exponierter Abschnitte der Pulverschicht.

10. Schlickerbasiertes Additivverfahren nach einem der vorstehenden Ansprüche,
wobei das Pulverbett einen freistehenden Hohlzylinder, umfassend eine untere und eine obere Stirnfläche bildet, und das Pulverbett zwischen der unteren und der oberen Stirnfläche eine im Hohlzylinder in einer Umfangsrichtung angeordnete Folge von schichtweise aufgebauten Bauteilen umfasst.

11. Schlickerbasiertes Additivverfahren, weiter umfassend:
Freistellen und/oder Herauslösen zumindest eines im Pulverbett durch abschnittsweises Konsolidieren ausgebildeten Bauteils durch ein Entfernen von nicht konsolidierten Anteilen der das Pulverbett ausbildenden Pulverschichten.

12. Schlickerbasiertes Additivverfahren nach einem der vorstehenden Ansprüche,
wobei der Schlicker ausgewählt ist unter einem silikatischen Keramikschlicker, unter einem Feinkeramiktonschlicker oder aus einer Suspension metallischer Partikel.

13. Vorrichtung zur additiven schlickerbasierten Fertigung, umfassend:
- eine Schlickerauftragungseinheit (20);
- eine Arbeitsplattform (10);
- eine Antriebsvorrichtung; und
- eine Konsolidierungseinheit (30);
wobei die Arbeitsplattform (10) in einer horizontalen Arbeitsebene beweglich angeordnet ist;
wobei die Antriebsvorrichtung eingerichtet ist, die Arbeitsplattform (10) so zu bewegen, dass ein beliebiger Punkt der Arbeitsplattform (10) einer stetigen in sich geschlossenen Kurve folgt, die einer Projektion der kontinuierlichen Bewegungsbahn der Schlickerauftragungseinheit (20) und/oder der kontinuierlichen Bewegungsbahn der Konsolidierungseinheit (30) auf die Oberflächenebene der Arbeitsplattform (10) entspricht,
wobei die Schlickerauftragungseinheit (20) und die Konsolidierungseinheit (30) relativ zueinander starr anordenbar sind und ein Abstand zwischen der Schlickerauftragungseinheit (20) und der Arbeitsplattform (10), sowie ein Abstand zwischen der Konsolidierungseinheit (30) und der Arbeitsplattform (10) so einstellbar ist, dass mit einem Durchlaufen einer Runde der kontinuierlichen Bewegungsbahn die genannten Abstände um den Betrag eines Sollwertes einer Schlickerschichtdicke vergrößerbar sind,
**dadurch gekennzeichnet, dass** der Abstand zwischen der Schlickerauftragungseinheit (20) und der Arbeitsplattform (10) während eines erstmaligen Durchlaufens der Runde der kontinuierlichen Bewegungsbahn einstellbar ist zwischen einem Schichtdickenminimalwert und einem Schichtdickensollwert.

14. Vorrichtung nach Anspruch 13,
wobei die Schlickerauftragungseinheit eine hohle Rakel (20) umfasst, wobei ein Schichtaufbau mittels einer kontinuierlichen Zuführung eines Schlickers durch die hohle Rakel (20) erfolgt, in der sich der Schlicker über eine gesamte Auftragsbreite gleichmäßig verteilt und auf einer zu einem Schichtstapel offenen Seite der hohlen Rakel (20) gleichförmig austritt,
wobei eine folgende Kante der hohlen Rakel (20), die in einer Fahrtrichtung dem Schlickerauftrag folgt, die Schlickerschichtdicke durch Abstreifen des Schlickers definiert.

15. Vorrichtung nach einem der Ansprüche 13 oder 14,
wobei die Schlickerauftragungseinheit (20) angepasst ist, einen Abstand zur Arbeitsplattform (10) kontinuierlich zu vergrößern, und ein kontinuierliches Vergrößern des Abstandes auf einen Bewegungszyklus der Arbeitsplattform (10) so angepasst ist, dass je Bewegungszyklus die Auftragungseinheit um einen Betrag einer Schlickerschichtdicke angehoben wird.

16. Vorrichtung nach einem der Ansprüche 13 bis 15,
wobei die Projektion der kontinuierlichen Bewegungsbahn auf die Ebene der Arbeitsplattform (10) durch einen Kreis beschreibbar ist.

17. Vorrichtung nach einem der Ansprüche 13 bis 16,
wobei die Arbeitsplattform (10) eine um einen Mittelpunkt drehbar gelagerte Scheibe ist, oder eine Arbeitsfläche der Arbeitsplattform (10) ist die Stirnfläche einer vertikal und um ihre Symmetrieachse drehbar angeordneten Walze.

18. Verwendung einer Arbeitsplattform (10) und einer Schlickerauftragungseinheit (20) zur Erzeugung eines schichtweise aufgebauten Pulverbetts,
wobei die Arbeitsplattform (10) eine planare Arbeitsoberfläche umfasst, und die Schlickerauftragungseinheit (20) in orthogonaler Richtung zur planaren Arbeitsoberfläche beweglich angeordnet ist,
wobei das Pulverbett durch ein kontinuierliches auf sich selbst Stapeln einer von der Schlickerauftragungseinheit (20) erzeugten Schlickerspur ausgebildet wird, indem mit einem vollständigen Absolvieren eines Verfahrweges der Arbeitsplattform relativ zur Schlickerauftragungseinheit (20) die Schlickerauftragungseinheit (20) einen Anfang der Schlickerspur wiedertrifft und den Verfahrweg zum Auftrag der zweiten, dritten und letztlich n-ten Schicht zum zweiten, dritten und letztlich n-ten Mal abfährt,
wobei die Schlickerspur erneut auf der bereits zuvor abgelegten Schlickerspur abgelegt wird, und wobei eine Schichtdicke der Schlickerspur nach dem ersten vollständigen Absolvieren des Verfahrweges der Arbeitsplattform (10) konstant bleibt, indem ein Abstand zwischen der Schlickerauftragungseinheit (20) und der planaren Arbeitsoberfläche während des vollständigen Absolvierens des Verfahrweges um die Schichtdicke vergrößert wird,
wobei die kontinuierlich erzeugte Schlickerspur nach dem Stapeln kontinuierlich entfeuchtet und abschnittsweise konsolidiert wird, sodass nach dem n+1 ten Absolvieren des Verfahrweges zumindest ein konsolidiertes Bauteil dem Pulverbett entnehmbar ist,
**dadurch gekennzeichnet, dass** einzelne aufeinander gestapelte Schichtabschnitte des Pulverbetts, bezogen auf die Arbeitsplattformoberfläche eine konstante Steigung aufweisen,
wobei die Steigung einem Quotienten aus der Schichtdicke und der Länge einer beim vollständigen Absolvieren des Verfahrweges von der Schichtauftragungseinheit (20) absolvierten Wegstrecke entspricht.

## Claims

1. Slip-based additive method for producing a component (50) built up in layers in a powder bed, comprising continuous application of slip in the form of a slip layer along a self-contained path,
the powder bed being arranged on a working platform (10),
the continuously applied slip layer being continuously subjected to moisture extraction and forming a continuous powder layer (40) in the process, and
individual adjacent portions of the continuous powder layer being subjected to consolidation, such that the component built up in layers from consolidated portions of the powder layer being surrounded by the powder bed,
the continuously applied slip layer being applied directly to the working platform (10) when the path is being traversed for the first time and, thereafter, the slip layer being applied to a new portion of the previously formed continuous powder layer (40) each time,
**characterised in that** a layer thickness of the slip layer that is continuously applied directly to the working platform continually increases from a layer-thickness minimum value to a layer-thickness target value.

2. Slip-based additive method according to claim 1,
wherein a projection of a distance covered by a slip-application unit in relation to a fixed point on the working platform (10) when applying the slip onto a plane which is arranged in parallel with the working platform forms the self-contained path, such that, once it has traversed the first lap of the path, the slip-application unit applies the slip layer to a new portion of the previously formed powder layer each time.

3. Slip-based additive method according to any of the preceding claims,
wherein the layer thickness of the slip layer which is not applied directly to the working platform, but to a new portion of the previously formed powder layer each time, always corresponds to the layer-thickness target value, such that the continuously formed powder bed contains a stack of powder layers each of a constant thickness in a direction extending orthogonally to a surface plane of the working platform.

4. Slip-based additive method according to any of the preceding claims, further comprising:
providing a slip.

5. Slip-based additive method according to any of the preceding claims,
wherein the consolidation of individual adjacent portions of the continuous powder layer involves drop-on-demand printing of a binder and/or application of a laser beam.

6. Slip-based additive method according to any of the preceding claims,
wherein, in the powder bed, consolidated portions of the powder layer that are in vertical contact with one another include at least one portion of the component (50) formed in layers.

7. Slip-based additive method according to any of the preceding claims,
wherein steps in a process sequence, comprising:
- continuously applying the slip in the form of a slip layer,
- continuously subjecting the applied slip layer to moisture extraction,
- forming a continuous powder layer, and
- consolidating the powder layer in portions,
are performed at least partially in parallel with one another once the layer-thickness target value has been reached.

8. Slip-based additive method according to any of the preceding claims,
wherein at least two separate components are formed in the powder bed.

9. Slip-based additive method according to any of the preceding claims,
wherein, in the powder bed, a first component can be formed in layers as a green body and, in parallel therewith, a second component can be formed in layers as a sintered body by the consolidation unit comprising a laser and a print head,
wherein the print head is configured for drop-on-demand printing of the binder and the laser is adapted for portion-wise sintering of exposed portions of the powder layer.

10. Slip-based additive method according to any of the preceding claims,
wherein the powder bed forms a free-standing hollow cylinder, comprising a lower and an upper end face, and the powder bed comprises a sequence of components built up in layers arranged in the hollow cylinder in a circumferential direction between the lower and the upper end face.

11. Slip-based additive method, further comprising:
releasing and/or detaching at least one component formed in the powder bed by portion-wise consolidation by removing non-consolidated fractions of the powder layers forming the powder bed.

12. Slip-based additive method according to any of the preceding claims,
wherein the slip is selected from a siliceous ceramic slip, a fine-ceramic clay slip, or a suspension of metal particles.

13. Device for slip-based additive manufacturing, comprising:
- a slip-application unit (20);
- a working platform (10);
- a drive device; and
- a consolidation unit (30);
the working platform (10) being arranged so as to be movable in a horizontal working plane;
the drive device being configured to move the working platform (10) such that any point on the working platform (10) follows a continual self-contained curve which corresponds to a projection of the continuous movement path of the slip-application unit (20) and/or the continuous movement path of the consolidation unit (30) onto the surface plane of the working platform (10),
the slip-application unit (20) and the consolidation unit (30) being able to be arranged rigidly relative to one another, and a distance between the slip-application unit (20) and the working platform (10) as well as a distance between the consolidation unit (30) and the working platform (10) being able to be set such that, as one lap of the continuous movement path is traversed, said distances can be increased by the magnitude of a target value of a slip layer thickness,
**characterised in that**, as the lap of the continuous movement path is traversed for the first time, the distance between the slip-application unit (20) and the working platform (10) can be set between a layer-thickness minimum value and a layer-thickness target value.

14. Device according to claim 13,
wherein the slip-application unit comprises a hollow doctor blade (20), with a layer being built up by a slip being continuously fed through the hollow doctor blade (20), in which the slip is evenly distributed over the entire application width and uniformly exits from a side of the hollow doctor blade (20) that is open towards a layer stack,
wherein a following edge of the hollow doctor blade (20), which follows the slip application in a direction of travel, defines the slip layer thickness by stripping off the slip.

15. Device according to any of claims 13 or 14,
wherein the slip-application unit (20) is adapted to continuously increase a distance from the working platform (10), and a continuous increase in the distance is adapted to a movement cycle of the working platform (10) such that the application unit is raised by a magnitude of a slip layer thickness each movement cycle.

16. Device according to any of claims 13 to 15,
wherein the projection of the continuous movement path onto the plane of the working platform (10) can be described by a circle.

17. Device according to any of claims 13 to 16,
wherein the working platform (10) is a disc rotatably mounted about a central point, or a working face of the working platform (10) is the end face of a roller arranged vertically and so as to be rotatable about its axis of symmetry.

18. Use of a working platform (10) and a slip-application unit (20) for producing a powder bed built up in layers,
the working platform (10) comprising a planar working surface, and the slip-application unit (20) being arranged to be movable in the orthogonal direction towards the planar working surface,
the powder bed being formed by continuously stacking a track of slip produced by the slip-application unit (20) on itself by the slip-application unit (20) meeting the start of the track of slip again and traversing a movement path of the working platform for the second, third and ultimately nth time in order to apply the second, third and ultimately nth layer, by completely covering the movement path relative to the slip-application unit (20),
the track of slip again being deposited on the already previously deposited track of slip, and a layer thickness of the track of slip remaining constant after the movement path of the working platform (10) has been completely covered for the first time by a distance between the slip-application unit (20) and the planar working surface being increased by the layer thickness as the movement path is being completely covered,
the continuously produced track of slip being continuously subjected to moisture extraction and consolidated in portions after stacking such that, once the movement path has been covered for the nth+1 time, at least one consolidated component can be removed from the powder bed,
**characterised in that** individual layer portions of the powder bed stacked on top of one another have a constant pitch based on the working-platform surface,
the pitch corresponding to a quotient of the layer thickness and the length of a stretch covered by the layer-application unit (20) when completely covering the movement path.

## Revendications

1. Procédé de fabrication additive à base de suspension pour la production d'une pièce construite par couches (50) dans un lit de poudre, comprenant une application continue d'une suspension sous la forme d'une couche de suspension le long d'une piste refermée sur elle-même,
dans lequel le lit de poudre est disposé sur une plate-forme de travail (10),
dans lequel la couche de suspension appliquée en continu est soumise à une déshumidification et forme alors une couche de poudre continue (40) et
dans lequel des portions individuelles adjacentes entre elles de la couche de poudre continue sont soumises à une consolidation, de façon à ce que la pièce, constituée par couches à partir de portions consolidées de la couche de poudre, soit entourée par le lit de poudre,
dans lequel la couche de suspension appliquée en continu est appliquée directement sur la plate-forme de travail (10) tant que la piste est démarrée pour la première fois et la couche de suspension est alors appliquée sur une nouvelle portion de la couche de poudre (40) réalisée en continu,
**caractérisé en ce qu'**une épaisseur de couche de la couche de suspension appliquée en continu directement sur la plate-forme de travail augmente de manière constante d'une valeur minimale d'épaisseur de couche à une valeur de consigne d'épaisseur de couche.

2. Procédé de fabrication additive à base de suspension selon la revendication 1,
dans lequel une projection d'un trajet parcouru lors de l'application de la suspension par une unité d'application de suspension par rapport à un point fixe sur la plate-forme de travail (10) forme, sur un plan qui est disposé parallèlement à la plate-forme de travail, la piste refermée sur elle-même, de façon à ce que l'unité d'application de suspension applique la couche de suspension, après le parcours du premier tour de la piste, sur une nouvelle portion de la couche de poudre réalisée précédemment.

3. Procédé de fabrication additive à base de suspension selon l'une des revendications précédentes,
dans lequel l'épaisseur de couche de la couche de suspension, qui n'est pas appliquée directement sur la plate-forme de travail, mais sur une nouvelle portion de la couche de poudre réalisée précédemment, correspond toujours à la valeur de consigne de l'épaisseur de couche, de façon à ce que le lit de poudre réalisé en continu comprenne, dans une direction qui s'étend perpendiculairement à un plan de surface de la plate-forme de travail, un empilement de couches de poudre d'une épaisseur constante.

4. Procédé de fabrication additive à base de suspension selon l'une des revendications précédentes, comprenant en outre :
la mise à disposition d'une suspension.

5. Procédé de fabrication additive à base de suspension selon l'une des revendications précédentes,
dans lequel la consolidation de portions individuelles adjacentes entre elles de la couche de poudre continue comprend une impression à la demande d'un liant et/ou une application d'un rayon laser.

6. Procédé de fabrication additive à base de suspension selon l'une des revendications précédentes,
dans lequel les portions de la couche de poudre consolidées en contact vertical entre elles dans le lit de poudre comprennent une portion de la pièce réalisée par couches (50).

7. Procédé de fabrication additive à base de suspension selon l'une des revendications précédentes,
dans lequel des étapes d'une séquence de processus, comprenant :
- l'application en continu de la suspension sous la forme d'une couche de suspension,
- la déshumidification en continu de la couche de suspension appliquée,
- la formation d'une couche de poudre continue et
- la consolidation, par portions, de la couche de poudre
sont exécutées de manière au moins partiellement parallèle entre elles une fois la valeur de consigne d'épaisseur de couche atteinte.

8. Procédé de fabrication additive à base de suspension selon l'une des revendications précédentes,
dans lequel, dans le lit de poudre, au moins deux pièces séparées sont réalisées.

9. Procédé de fabrication additive à base de suspension selon l'une des revendications précédentes,
dans lequel, dans le lit de poudre, une première pièce peut être réalisée par couches sous la forme d'un corps vert et, en parallèle une deuxième pièce peut être réalisée par couches sous la forme d'un corps fritté, l'unité de consolidation comprenant un laser et une tête d'impression,
dans lequel la tête d'impression est conçue pour une impression à la demande du liant et le laser est conçu pour un frittage par portions de portions exposées de la couche de poudre.

10. Procédé de fabrication additive à base de suspension selon l'une des revendications précédentes,
dans lequel le lit de poudre forme un cylindre creux dégagé comprenant une face frontale inférieure et une face frontale supérieure et le lit de poudre entre la face frontale inférieure et la face frontale supérieure comprend une série, disposée dans le cylindre creux dans la direction de la circonférence, de pièces réalisées par couches.

11. Procédé de fabrication additive à base de suspension comprenant en outre :
le dégagement et/ou le détachement d'au moins une pièce réalisée dans le lit de poudre par consolidation par portions, grâce à une élimination des parties non consolidées des couches de poudres constituant le lit de poudre.

12. Procédé de fabrication additive à base de suspension selon l'une des revendications précédentes,
dans lequel la suspension est sélectionnée parmi une suspension de céramique siliceux, une suspension d'argile céramique fine ou une suspension de particules métalliques.

13. Dispositif de fabrication additive à base de suspension, comprenant :
- une unité d'application de suspension (20) ;
- une plate-forme de travail (10) ;
- un dispositif d'entraînement ; et
- une unité de consolidation (30) ;
dans lequel la plate-forme de travail (10) est disposée de manière mobile dans un plan de travail horizontal ;
dans lequel le dispositif d'entraînement est conçu pour déplacer la plate-forme de travail (10) de façon à ce qu'un point quelconque de la plate-forme de travail (10) suive une courbe constante refermée sur elle-même, qui correspond à une projection de la trajectoire continue de l'unité d'application de suspension (20) et/ou de la trajectoire continue de l'unité de consolidation (30) sur le plan de la surface de la plate-forme de travail (10),
dans lequel l'unité d'application de suspension (20) et l'unité de consolidation (30) peuvent être disposées de manière rigide entre elles et une distance entre l'unité d'application de suspension (20) et la plate-forme de travail (10) ainsi qu'une distance entre l'unité de consolidation (30) et la plate-forme de travail (10) peut être réglée de façon à ce que, avec le parcours d'un tour de la trajectoire continue, les distances mentionnées puissent être augmentées d'une valeur de consigne d'une épaisseur de couche de suspension,
**caractérisé en ce que** la distance entre l'unité d'application de suspension (20) et la plate-forme de travail (10) est réglable, pendant un premier parcours du tour de la trajectoire continue, entre une valeur minimale d'épaisseur de couche et une valeur de consigne d'épaisseur de couche.

14. Dispositif selon la revendication 13,
dans lequel l'unité d'application de suspension comprend un racloir creux (20), dans lequel une structure en couches est réalisée au moyen d'une introduction en continu d'une suspension par le racloir creux (20), dans laquelle la suspension est répartie uniformément sur toute la largeur d'application et sort uniformément sur un côté, ouvert en direction d'un empilement de couches, du racloir creux (20),
dans lequel une arête suivante du racloir creux (20) ; qui suit l'application de suspension dans une direction de déplacement, définit l'épaisseur de couche de suspension par le raclage de la suspension.

15. Dispositif selon l'une des revendications 13 ou 14,
dans lequel l'unité d'application de suspension (20) est conçue pour augmenter en continu une distance par rapport à la plate-forme de travail (10) et une augmentation en continu de la distance sur un cycle de déplacement de la plate-forme de travail (10) est conçue de façon à ce que, à chaque cycle de déplacement, l'unité d'application soit soulevée d'une valeur d'épaisseur de couche de suspension.

16. Dispositif selon l'une des revendications 13 à 15,
dans lequel la projection de la trajectoire continue sur le plan de la plate-forme de travail (10) peut être décrite par un cercle.

17. Dispositif selon l'une des revendications 13 à 16,
dans lequel la plate-forme de travail (10) est un disque logé de manière rotative autour d'un point central ou une surface de travail de la plate-forme de travail (10) est la face frontale d'un rouleau disposé verticalement et de manière rotative autour de son axe de symétrie.

18. Utilisation d'une plate-forme de travail (10) et d'une unité d'application de suspension (20) pour la réalisation d'un lit de poudre construit par couches,
dans laquelle la plate-forme de travail (10) comprend une surface de travail plane et l'unité d'application de suspension (20) est disposée de manière mobile dans une direction perpendiculaire à la surface de travail plane,
dans laquelle le lit de poudre est réalisé par un empilement continu sur lui-même d'une trace de suspension réalisée par l'unité d'application de suspension (20), grâce au fait que, lorsque le trajet de la plate-forme de travail par rapport à l'unité d'application de suspension (20) a été entièrement parcouru, l'unité d'application de suspension (20) rencontre à nouveau un début de la trace de suspension et parcourt le trajet pour la deuxième, troisième et finalement énième fois pour l'application de la deuxième, de la troisième et finalement de la énième couche,
dans laquelle la trace de suspension est à nouveau déposée sur la trace de suspension déposée précédemment et dans laquelle une épaisseur de couche de la trace de suspension reste constante après le premier parcours complet du trajet de la plate-forme de travail (10), grâce au fait qu'une distance entre l'unité d'application de suspension (20) et la surface de travail plane est augmentée, pendant le parcours complet du trajet, de l'épaisseur de la couche,
dans laquelle la trace de suspension réalisée en continu est déshumidifiée en continu et consolidée par portions après l'empilement, de façon à ce que, après le n+1-ième parcours du trajet, au moins une pièce consolidée puisse être prélevée du lit de poudre,
**caractérisé en ce que** les portions de couches du lit de poudre, empilées les unes sur les autres, présentent, par rapport à la surface de la plate-forme de travail, une inclinaison constante,
dans laquelle l'inclinaison correspond à un quotient entre l'épaisseur de couche et la longueur du trajet parcouru par l'unité d'application de suspension (20) lors du parcours complet du trajet de déplacement.
